(19) Europäisches Patentamt
European Patent Office
Office européen des brevets

(11) **EP 1 161 990 B1**

(12) **FASCICULE DE BREVET EUROPEEN**

(45) Date de publication et mention de la délivrance du brevet:
**29.02.2012 Bulletin 2012/09**

(51) Int Cl.:
**B01J 19/00** *(2006.01)* **G06F 17/50** *(2006.01)*
**G21F 9/16** *(2006.01)*

(21) Numéro de dépôt: **01401355.1**

(22) Date de dépôt: **23.05.2001**

(54) **Procédé de sélection de nouveaux matériaux par estimation de l'activité catalytique ou l'aptitude au stockage des radioéléments**

Selektionsverfahren neuer Materialien bei Schätzung ihrer katalytischen Aktivität oder der Lagerfähigkeit radioaktiven Elemente

Process of selection of novelty materials by estimating their catalytic activity or the storability of radioactive elements.

(84) Etats contractants désignés:
**AT BE CH CY DE DK ES FI FR GB GR IE IT LI LU MC NL PT SE TR**

(30) Priorité: **09.06.2000 FR 0007473**

(43) Date de publication de la demande:
**12.12.2001 Bulletin 2001/50**

(73) Titulaire: **Institut Français du Pétrole**
**92852 Rueil-Malmaison Cedex (FR)**

(72) Inventeur: **Toulhoat, Hervé**
**95220 Herblay (FR)**

(56) Documents cités:
**FR-A- 2 758 278     US-A- 6 038 514**

• **TOULHOAT H ET AL.: "Transition metals to sulfur binding energies relationship to catalytic activities in HDS: back to Sabatier with first principle calculations" CATALYSIS TODAY, vol. 50, 1999, pages 629-636, XP000986812**
• **DOORNKAMP C ET AL.: "The Isotopic Exchange Reaction of Oxygen on Metal Oxides" JOURNAL OF CATALYSIS, vol. 182, 1999, pages 390-399, XP002161357**
• **RAYBAUD P ET AL.: "Structure, Energetics and Electronic Properties of the Surface of a Promoted MoS2 Catalyst: An ab Initio Local Density Functional Study" JOURNAL OF CATALYSIS, vol. 190, février 2000 (2000-02), pages 128-143, XP002161358**
• **RAYBAUD P ET AL.: "Ab initio density functional studies of transition-metal sulphides: I. Crystal structure and cohesive properties" J. PHYS.: CONDENS. MATTER, vol. 9, 15 décembre 1997 (1997-12-15), pages 11085-11106, XP000986916**
• **DATABASE INIS [en ligne] INTERNATIONAL ATOMIC ENERGY AGENCY (IAEA), VIENNA, AT; PARLINSKI, K. (THE HENRYK NIEWODNICZANSKI INSTITUTE OF NUCLEAR PHYSICS, CRACOW (POLAND)): "Department of Materials Research by Computers - Overview." retrieved from STN Database accession no. 58739 XP002161359 & THE HENRYK NIEWODNICZANSKI INSTITUTE OF NUCLEAR PHYSICS, CRACOW, POLAND - ANNUAL REPORT 1999. EDITOR: BRZEZICKA, B.; DRYZEK, E.; ERBEL, D.; FREINDL, L.; KRYGOWSKA-DONIEC, M.; RYBICKA, M.; SAWICKI, P.; STYCZEN, J.; WOJCIECHOWSKI, J. THE HENRYK NIEWODNI, Poland**
• **DATABASE INIS [en ligne] INTERNATIONAL ATOMIC ENERGY AGENCY (IAEA), VIENNA, AT; ANIM-SAMPONG, S. (NATIONAL NUCLEAR RESEARCH INSITUTE, GHANA ATOMIC ENERGY COMMISSION, ACCRA (GHANA)): "Calculation of resonance reaction rates for the Ghana Research Reactor-1 fuel lattice unit cell using the WIMS lattice code." retrieved from STN Database accession no. 61112 XP002161360 & DEC 1997. 73 P 5 FIGS., 35 TABS. 10 REFS. AVAILABLE FROM NATIONAL NUCLEAR RESEARCH INSTITUTE, GHANA ATOMIC ENERGY COMMISSION, P. O. BOX 80, LEGON, ACCRA, GHANA. FAX: 233-21-400807., Ghana**

EP 1 161 990 B1

## Description

L'invention concerne un procédé d'estimation d'une propriété d'usage, qui est soit l'activité d'un catalyseur, soit la capacité de confinement d'un radioélément dans une matrice minérale solide, d'un matériau $M_{AB}$ dont l'élément actif est AB. Le procédé selon l'invention permet de classer des solides cristallins par ordre d'efficacité pour un grand nombre d'applications et donc de sélectionner de nouveaux matériaux catalytiques ou de stockage de radioéléments dont l'usage fait intervenir la formation ou la modification d'au moins une liaison chimique caractérisée par un descripteur $D_{AB}$. ou impose d'éviter la formation de ladite liaison.

## ART ANTERIEUR

Dans l'état présent de la technique, la sélection ou la conception de matériaux en vue d'une application déterminée n'est envisagée que sur une base expérimentale, selon la méthode des essais et erreurs. Cette pratique est évidemment longue et coûteuse, et tout procédé autorisant un allègement significatif de cette phase de recherche présenterait un avantage technique et économique.

De très nombreuses propriétés d'usage des matériaux sont dans une large mesure directement déterminées par les forces de cohésion chimique inhérentes à leur composition: c'est par exemple le cas des propriétés mécaniques (module élastique, résistance à la rupture, dureté...) des métaux et de leurs alliages, des céramiques, des matériaux de construction, ou encore le cas des solubilités d'éléments hôtes, mises à profit par exemple pour la capture d'éléments radioactifs dans des structures minérales à des fins de stockage. Ces forces de cohésion chimique détermineront aussi toutes les propriétés de surface des matériaux, dont l'homme du métier connaît l'importance technologique: coefficient de friction, résistance à l'usure, comportement à la corrosion, résistance à l'oxydation, adhésivité, mouillabilité, activité catalytique...

Les forces de cohésion chimique gouvernent encore la structure atomique locale d'un matériau, et par là sa structure électronique et toutes les propriétés physiques (électroniques, optiques, magnétiques...) qui en découlent. C'est ainsi que la recherche de nouvelles phases supra-conductrices du courant électrique à haute température, ou encore la recherche de nouveaux électrolytes solides à conductivité ionique améliorée pour la fabrication de piles à combustibles plus efficaces se ramènent à la recherche de composés chimiques présentant une organisation locale particulière (voir par exemple: J. B. Goodenough, Nature, vol. 404, 20/04/2000, p. 821-822 , et références citées).

Le praticien à la recherche de matériaux nouveaux pour une application donnée s'appuie aujourd'hui autant qu'il est possible sur les connaissances et les méthodes élaborées par la discipline scientifique qu'est la chimie du solide: cette dernière quantifie les stabilités relatives des structures dans des conditions de température et de pression données sur la base du concept d'enthalpie de formation standard.

Les enthalpies de formation standard de très nombreux composés ont été mesurées expérimentalement et tabulées; elles permettent par exemple de construire d'utiles diagrammes dits de "phases", dans le but de situer les domaines de conditions d'expérience, à l'intérieur desquels les structures d'intérêt restent stables. Pour autant, ces données et diagrammes ont une valeur limitée pour l'invention de nouvelles phases stables dans un domaine d'utilisation prescrit: tout au plus l'homme du métier pourra donc extrapoler par analogie et intuition chimique à partir des phases de structure et composition connues.

En vue de guider logiquement son action, le chimiste pratiquant la synthèse de composés organiques ou inorganiques a très tôt élaboré la notion d'affinité chimique, puis lorsque la structure atomique de la matière fût bien établie, la notion de force de liaison inter atomique. La chimie théorique moderne a pour objet central la construction d'une théorie quantitative et prédictive de la liaison chimique au sein des édifices atomiques moléculaires ou cristallins.

La physique quantique a fourni la base d'une théorie mathématique dont l'extrême précision se vérifie d'autant mieux et dans un domaine plus large, à mesure que l'accroissement de puissance des ordinateurs électroniques autorise la résolution numérique des équations constitutives pour des compositions chimiques toujours plus complexes. Ces techniques de calcul dites "ab initio", car libérées de la connaissance préalable de données empiriques, se sont tant développées en moins de deux décennies, qu'il est devenu envisageable de les mettre à profit pour prédire la stabilité, la géométrie, et les propriétés physiques et chimiques d'un édifice chimique de composition donnée, préalablement à toute expérience de synthèse en laboratoire.

Cette "conception de matériaux assistée par ordinateur" est un domaine de recherche méthodologique très actif, mais dont on connaît encore un nombre très limité de succès pratiques. Ces succès sont confinés à des cas particuliers, par exemple la mise au point d'un catalyseur de reformage d'hydrocarbures à la vapeur à base de nickel métallique, de stabilité améliorée par dépôt sélectif d'atomes d'or en surface (F. Besenbacher et al. Science, Vol 279, 1913-1915, 20 Mars 1998) ou encore la mise en évidence d'une composition de cathode améliorant significativement le voltage et diminuant le poids et le coût d'une batterie au lithium (G. Ceder et al. Nature, Vol 392, 694-696, 16 Avril 1998). Ces cas de succès récents exemplifient plutôt une démarche de vérification par le calcul d'une conception d'origine intuitive, confirmée a posteriori par la mesure expérimentale.

L'avantage économique de tels cheminements n'est pas clairement démontré à l'heure actuelle, mais tout homme du métier leur conférera une supériorité de principe sur l'expérimentation exploratoire par essais et erreurs, dont l'actualisation dépendra de la rapidité et du coût des calculs à mettre en oeuvre.

A cet égard, la croissance très rapide avec le temps de la puissance de calcul à coût constant, du fait des progrès dans les technologies d'intégration des circuits électroniques, laisse augurer des percées décisives dans un avenir proche. Le procédé selon l'invention anticipe de manière inattendue dans cette direction, en tant que procédé de calcul ab initio rapide de descripteurs quantitatifs de la liaison chimique dans les solides cristallins, permettant de classer ces derniers par ordre d'efficacité pour un grand nombre d'applications de première importance technologique.

Une stratégie de recherche exploratoire de nouveaux matériaux que l'on peut considérer comme diamétralement opposée à la "conception de matériaux assistée par ordinateur" définie plus haut, consiste en la "chimie combinatoire" apparue depuis quelques années (voir par exemple les Brevets US-A-5,959,297 et US-A-5,985,356), et qui ne prend un sens qu'associée à des techniques dites « d'expérimentation à haut débit ». Il s'agit dans ce cas d'explorer systématiquement par l'expérience un espace de compositions et de conditions de synthèse prédéfini. Les matériaux résultant de ces combinaisons systématiques sont préparés en très petites quantités, juste suffisantes pour des essais permettant un tri selon la ou les propriétés désirées. Les combinaisons passant les tests permettent de redéfinir un espace d'exploration plus restreint, au sein duquel peut être réitérée la procédure de synthèse combinatoire et d'essai en vue d'affiner l'identification des combinaisons conformes à la cible initiale. La ou les combinaisons découvertes sont alors synthétisées en plus grandes quantités en vue de mesurer leurs propriétés d'usage avec précision.

L'approche "chimie combinatoire" a fait récemment l'objet de considérables investissements financiers ayant conduit à d'importants développements technologiques. Dans ce contexte, les technologies informatiques facilitent la gestion et le traçage des propriétés des très nombreux échantillons synthétisés et essayés à haute cadence. Elles permettent en outre de piloter le processus généralement robotisé de synthèse et essai à haute cadence. Les cibles de la "chimie combinatoire" ont été jusqu'à présent par exemple de nouveaux médicaments moléculaires, de nouveaux matériaux photophores (US-A-6,013,199), de nouveaux catalyseurs de polymérisation (US-A-6,034,240, US-A-6,043,363), de nouveaux matériaux à magnéto-résistance géante (US-A-5,776,359), ou encore de nouveaux catalyseurs hétérogènes (S. M. Senkan dans Nature, Vol 394, p 350-353, 23 Juillet 1998).

Les praticiens de la "chimie combinatoire" ont assez vite reconnu que l'exploration en aveugle d'un domaine de combinaisons présente en général un taux de succès extrêmement faible, qui risque de n'être pas suffisamment compensé par le très grand nombre d'expériences. Des voies d'amélioration ont été donc proposées, qui reviennent à guider l'exploration par des éléments de connaissance a priori. Un cycle de tri peut en outre être considéré comme un apport de connaissance susceptible de mieux guider le cycle de tri suivant. C'est ainsi que Baerns et al. ont par exemple démontré à cet effet l'intérêt d'une procédure dite d'évolution artificielle (Baerns et al., conférence sur les approches combinatoires pour la découverte de nouveaux matériaux (« Combinatorial approaches for new materials discovery »), organisée par « The Knowledge Foundation » (Fondation du Savoir), San Diego, CA, USA, 23-25 Janvier 2000).

Une autre voie consiste à développer des relations quantitatives structure-propriétés (RQSP) en corrélant un indice de performance selon la propriété visée avec un ensemble de paramètres numériques caractérisant chaque composé chimique et appelés descripteurs. Les descripteurs sont généralement issus de calcul théoriques: masse moléculaire, volume moléculaire, facteurs de forme géométrique, moments de la distribution moyenne de charge, indices topologiques, voir par exemple J.M. Newsam, dans « Catalyse combinatoire et haut débit de conception et d'évaluation de catalyseurs » (Combinatorial catalysis and high throughput catalyst design and testing), Séries de publication NATO ASI, Rédacteur en chef E.G. Derouane, Editeur Kluwer Academic, Dordrecht, 1999. Les méthodes de régression linéaire ou non-linéaires modernes permettent souvent d'établir de bonnes corrélations entre indice de performance et une fonction mathématique multivariée d'un jeu limité de descripteurs. De telles corrélations permettent d'orienter la recherche combinatoire vers les structures chimiques dont les descripteurs théoriques maximisent la fonction modélisant l'indice de performance. Cependant, la méthode des descripteurs théoriques est actuellement appliquée quasi exclusivement pour des composés moléculaires, et on ne connaît pas d'exemple de descripteur pour des matériaux cristallins.

L'auteur de la présente invention a déjà publié des travaux décrivant un concept primitif de descripteur de l'énergie de liaison métal-soufre dans les sulfures des métaux de transition et son utilisation pour caractériser l'activité catalytique de tels sulfures (voir H. Toulhoat et al., dans « Catalysis today » (La Catalyse Aujourd'hui), V50, p 629-636, 1999 et brevet FR-2.758.278). Cependant ce descripteur primitif y est défini comme le rapport de l'énergie de cohésion du solide par cellule unitaire au nombre de liaisons du type considéré identifiables par cellules unitaires. Cette définition est différente de la définition donnée pour le descripteur selon la présente invention, et n'en découle pas.

## RESUME DE L'INVENTION

La présente invention décrit comment une famille de descripteurs théoriques de la liaison chimique entre paires atomiques dans un solide cristallin quelconque, peut être utilisée pour trouver de nouveaux solides à usage déterminé. De manière inattendue, ces nouveaux descripteurs possèdent une capacité prédictive pour les propriétés d'usage technologique des solides cristallins suivantes : activité catalytique ou aptitude au stockage de radioéléments.

La présente invention permet de classer des solides cristallins par ordre d'efficacité pour un grand nombre d'applications. Elle présente un avantage tout particulier lorsque l'on met en oeuvre les nouvelles techniques de synthèse et de tri à haut débit, notamment en vue de trouver des matériaux actifs sous forme de solides cristallins ou partiellement cristallins.

L'invention concerne un procédé d'estimation d'une propriété d'usage d'un matériau $M_{AB}$ qui est soit l'activité catalytique, soit l'aptitude au stockage de radioelements et dont l'élément actif est AB, à partir d'un descripteur. Ce descripteur est une quantité calculée, rattachée à chaque matériau, et corrélable à la propriété d'usage dudit matériau. Cette propriété d'usage est estimée au moyen d'un indice $R_{AB}$ qui peut être déterminé au moyen du procédé selon l'invention. Ainsi, lorsque l'usage du matériau est la catalyse, sa propriété d'usage (activité catalytique) peut être quantifiée grâce à la mesure de la vitesse de la réaction catalysée ou de la conversion. Ledit descripteur a la dimension d'une énergie et est considéré comme représentatif de l'énergie de liaison chimique entre un élément ou ensemble d'éléments B et l'élément ou l'ensemble d'éléments A, dans un matériau de formule générale AB.

Le procédé selon l'invention est donc un procédé d'estimation d'une propriété d'usage d'un matériau $M_{AB}$ qui est soit l'activité catalytique, soit l'aptitude au stockage de radioelements et dont l'élément actif est AB. Il est ainsi possible grâce au procédé selon l'invention de déterminer un indice $R_{AB}$ qui constitue une estimation de la propriété d'usage du matériau $M_{AB}$.

Ledit procédé comprend les étapes suivantes :

a) détermination de la valeur des descripteurs $D_{XY}$ pour un ensemble de matériaux $M_{XY}$ dont l'élément actif est XY et dont l'indice $R_{XY}$ mesurant la propriété d'usage dudit matériau est connu,
b) tracé ou expression mathématique de la corrélation $R_{XY}=f(D_{XY})$, l'indice $R_{XY}$ étant connu,
c) calcul du descripteur $D_{AB}$ pour le matériau $M_{AB}$,
d) détermination de l'indice $R_{AB}$ qui constitue une estimation de la propriété d'usage pour le matériau $M_{AB}$ en reportant la valeur $D_{AB}$ sur la corrélation $R_{XY}=f(D_{XY})$, ou en utilisant l'expression mathématique de ladite corrélation.

## DESCRIPTION DE L'INVENTION

La présente invention décrit un procédé selon la revendication 1 utilisable pour la sélection de matériaux pour un usage qui est soit l'activité catalytique, soit l'aptitude au stockage de radioéléments dudit matériau. Le procédé selon l'invention permet en effet l'estimation de la propriété d'usage, donc du niveau de performance d'un matériau dans cet usage, par exemple pour des applications en catalyse hétérogène. Le procédé selon l'invention est fondé sur le calcul de quantités mesurant l'affinité du matériau pour un élément chimique donné, et par là prédictives d'une propriété d'usage donnée. Cet usage peut être par exemple la catalyse hétérogène selon le principe de Sabatier bien connu de l'homme du métier, le stockage d'éléments radioactifs par insertion dans une matrice minérale.

Le procédé selon l'invention utilise un algorithme ou procédé de calcul, des quantités de type $D_{XY}$ (ou $D_{AB}$) qui ont la dimension d'un énergie. Chacune de ces quantités appelées descripteur de l'énergie de liaison chimique dans un matériau de formule générale XY (ou AB) entre un élément Y (B) et son complément X (A). X, Y, A ou B peuvent être constitué d'un nombre quelconque d'atomes et présenter des stoechiométries variables.

Les descripteurs $D_{XY}$ et/ou $D_{AB}$ peuvent être calculés au moyen du procédé P2, par exemple mais pas exclusivement lorsque les caractéristiques cristallines du matériau XY ne sont pas disponibles dans une base de données cristallographiques. Le procédé P2 comprend les étapes suivantes :

a1) identification des caractéristiques cristallines du matériau XY (ou AB) par analogie avec des structures existantes, ou dans une base de données cristallographiques expérimentales.
a2) calcul de l'énergie totale par maille unitaire du réseau de Bravais de XY (ou AB),
a3) éventuellement recherche itérative des valeurs des paramètres de maille de la structure minimisant l'énergie totale selon la méthode de calcul adoptée, et définissant la maille optimale XY (ou AB) d'énergie totale $E_{XY}$ (ou $E_{AB}$),
a4) construction de la sous-maille X (ou A) obtenue en éliminant les atomes de type B de la maille optimale XY (ou AB),
a5) calcul de l'énergie totale $E_X$ (ou $E_A$) par maille unitaire du réseau de Bravais de A,
a6) construction de la sous-maille Y (ou B) obtenue en éliminant tous les atomes appartenant au complément X (ou A) dans la maille optimale XY (ou AB),
a7) calcul de l'énergie totale $E_Y$ (ou $E_B$) par maille unitaire Y (ou B) du réseau de Bravais de Y (ou B),
a8) détermination du nombre n d'atomes de X (ou A) présents dans la première sphère de coordination d'un atome Y (ou B) dans la maille optimale XY (ou AB),
a9) détermination du nombre b d'atomes Y (ou B) par maille optimale XY (ou AB),
a10) calcul du descripteur $D_{XY}$ (ou $D_{AB}$) en appliquant la formule suivante: $D_{XY} = [E_{XY}-(E_X+E_Y)]/nb$ (ou $D_{AB} = [E_{AB}-(E_A+E_B)]/nb$).

La méthode d'identification des caractéristiques cristallines est bien connue de l'homme du métier : elle consiste à déterminer la maille élémentaire du réseau de Bravais du cristal par les coordonnées de ses trois vecteurs unitaires a, b, et c, dans l'espace tridimensionnel de la géométrie euclidienne, puis l'ensemble des atomes constituant la maille asymétrique et leurs coordonnées dans le repère constitué par les trois vecteurs a, b et c et enfin l'ensemble des opérations de symétrie à appliquer aux positions des atomes de la maille asymétrique pour reconstruire l'ensemble des positions atomiques de la maille unitaire. La structure du cristal parfait infini est entièrement déterminée par les opérations de translation de la maille unitaire dans l'espace selon les trois vecteurs a, b et c. l'ensemble des opérations de symétrie hormis les trois translations forme un groupe au sens de la théorie mathématique des groupes, dit groupe d'espace. Le nombre de ces groupes est fini, et il en existe une nomenclature bien répertoriée.

Les techniques expérimentales permettant de déterminer les caractéristiques cristallines d'un composé cristallin (également appelé matériau cristallin) font appel aux phénomènes de diffraction des ondes électromagnétiques telles que les rayons X ou encore des particules telles que les neutrons. L'ouvrage « Structure et analyse chimique des matériaux " ( Structural and chemical analysis of materials) du professeur J.P. Eberhart, edité par John Wiley and Sons, à Chichester en 1991, fait référence pour la description des bases théoriques et techniques de la détermination des caractéristiques cristallines de solides. Les caractéristiques cristallines d'un très grand nombre de matériaux ont été déterminées expérimentalement et se trouvent répertoriées dans des bases de données publiquement accessibles, telles que par exemple la « Base de donnée des Structures Cristallines Minérales » ( Inorganic Crystal Structure Database ou ICSD) produite par l'Institut de Chimie Minérale Gmelin et le Centre d'Informations Factuelles ( Gmelin-Institut fuer Anorganische Chemie et Fachinformationszentrum) de Karlsruhe en Allemagne, ou encore la base « Crystmet » produite par le groupe du Professeur John R. Rodgers à Ottawa, Canada. Ces deux bases de données sont distribuées sous forme électronique notamment par les sociétés SciCo Inc. 5031 Palermo Drive, Oceanside, CA 92057, USA, et Materials Design S.A.R.L. 44 avenue F.A. Bartholdi, 72000, Le Mans, France.

La détermination de structures par analogie avec des structures existantes consiste simplement en la construction d'une structure hypothétique par substitution d'atomes d'une structure connue, sur la base de similitudes chimiques connues de l'homme du métier. Pour un matériau cristallin de formule générale XY (ou AB), le nombre b d'atomes de type Y (ou B) par maille se déduit de manière évidente de la connaissance de l'ensemble des positions atomiques de la maille unitaire selon la méthode expliquée ci-dessus.

La méthode de calcul de l'énergie totale est de préférence une méthode de résolution de l'équation de Schrödinger décrivant le mouvement des électrons du matériau XY (ou AB) dans le champ coulombien périodique déterminé par le réseau des noyaux atomiques localisés dans une maille, et de manière plus préférée une méthode de résolution déduite de la théorie de la fonctionnelle de la densité (voir par exemple l'article de E. Wimmer dans « Nouvelles Tendances dans la Chimie des Matériaux » (New trends in materials chemistry ), C.R.A. Catlow et A.K. Cheetham Rédacteurs en chef, Publié par Kluwer Scientific, Dordrecht, p 195-238, 1997).

La méthode de détermination du nombre n d'atomes de X (ou A) présents dans la première sphère de coordination d'un atome Y (ou B) dans la maille optimale de XY (ou AB) est définie comme suit: elle nécessite la donnée de l'ensemble des positions atomiques des atomes constituant la maille unitaire du matériau cristallin de XY (ou AB), selon la méthode décrite précédemment. Un atome Y (ou B) est sélectionné, et la position de son centre de masse est choisi comme centre d'une sphère, dite « première sphère de coordination », dont le rayon est fixé à une valeur correspondant aux longueurs de liaisons chimiques usuelles, soit de 0,05 à 0, 4 nanomètres environ, de préférence 0,1 à 0,3 manomètres, de façon à englober dans cette sphère les atomes premiers voisins de Y (ou B), situés à des distances égales ou comparables de Y (ou B).

L'invention concerne un procédé $E_P$ d'estimation d'une propriété d'usage d'un matériau $M_{AB}$ dont l'élément actif est AB. Il est en effet possible grâce au procédé selon l'invention de déterminer un indice $R_{AB}$ qui constitue une estimation de la propriété d'usage du matériau $M_{AB}$.

Ledit procédé $E_P$ comprend les étapes suivantes :

a) détermination de la valeur des descripteurs $D_{XY}$ pour un ensemble de matériaux $M_{XY}$ dont l'élément actif est XY et dont l'indice $R_{XY}$ mesurant la propriété d'usage dudit matériau est connu,
b) tracé ou expression mathématique de la corrélation $R_{XY}=f(D_{XY})$, l'indice $R_{XY}$ étant connu,
c) calcul du descripteur $D_{AB}$ pour le matériau $M_{AB}$,
d) détermination de l'indice $R_{AB}$ qui constitue une estimation de la propriété d'usage pour le matériau $M_{AB}$ en reportant la valeur $D_{AB}$ sur la corrélation $R_{XY}=f(D_{XY})$, ou en utilisant l'expression mathématique de ladite corrélation.

De manière surprenante, le descripteur $D_{AB}$ permet d'estimer la valeur de la propriété d'usage pour le matériau $M_{AB}$ dont l'élément actif est un matériau chimique AB cristallin auquel ledit descripteur se rapporte.

Des valeurs expérimentales d'indices $R_{XY}$ mesurant des propriétés d'usage, telles que par exemple des vitesses de réaction intrinsèques, qui permettent de comparer valablement les activités de métaux de transition purs, sont disponibles dans la littérature pour de nombreuses réactions d'intérêt industriel comme par exemple l'hydrogénation de l'éthylène ou d'autres oléfines, l'hydrogénation du benzène, l'hydrogénation du monoxyde de carbone, la désalkylation à la vapeur du toluène, les réactions d'alkylation de paraffines ou d'aromatiques, d'hydrotraitement, d'hydrocraquage isomérisant, d'hydrogénation sélective de dioléfines et d'acétyléniques ou de reforming, cette liste n'étant pas limitative.

De nombreuses tentatives ont été effectuées pour corréler ces jeux de données de vitesse à divers paramètres descriptifs des métaux, ou à diverses quantités mesurant des propriétés physico-chimiques de ces métaux, sans qu'aucune n'ait pu jusqu'à présent fournir un guide convaincant à l'homme du métier pour identifier une composition catalytique nouvelle qui présenterait une vitesse de réaction plus élevée que celles déjà observées.

De manière très surprenante, on a constaté qu'en portant les valeurs d'activité dans différents réactions chimiques (indice $R_{XY}$), en fonction des descripteurs $D_{XY}$ selon l'invention, on obtient des courbes en volcan dont le maximum d'activité $R_{max}$ se situe à des endroits différents selon la réaction chimique. A chaque réaction chimique correspond une courbe maîtresse à maximum de forme caractéristique et l'abscisse de ce maximum est elle-même caractéristique. Il est maintenant possible de calculer le descripteur $D_{AB}$ correspondant à un nouveau matériau catalytique $M_{AB}$, et par report sur la courbe maîtresse, ou calcul en utilisant l'expression mathématique de la corrélation $R_{XY} = f(D_{XY})$, de prévoir la vitesse de réaction $R_{AB}$ de ce matériau catalytique dans la réaction chimique souhaitée.

Ainsi il a par exemple été trouvé que pour de nombreuses réactions de transformation de molécules contenant du carbone, la propriété d'usage d'indice $R_{XY}$ qui est alors le niveau d'activité catalytique des métaux et alliages de métaux de transition (par exemple mesuré par la vitesse de la réaction chimique) est corrélée au descripteur $D_{MC}$ relatif aux carbures des métaux M considérés. Par exemple, lorsque MaC est un carbure d'un métal de transition, $D_{MC}$ décrit l'énergie de liaison métal-carbone, et l'on a découvert qu'il existe des corrélations entre le descripteur $D_{MC}$ et l'activité catalytique intrinsèque du métal M mesurée expérimentalement pour un grand nombre de réactions d'intérêt pratique. Il est donc possible de découvrir a priori l'activité d'un autre métal ou d'un composé de métaux en calculant le descripteur correspondant.

Ces corrélations semblent se conformer au principe de Sabatier, bien connu de l'homme du métier selon lequel lorsque l'on considère la vitesse d'une réaction chimique donnée V, toutes choses égales par ailleurs, en présence d'une série de matériaux dont la surface est capable de catalyser cette réaction, cette vitesse est maximale pour une force d'interaction F entre réactif et surface qui soit ni trop forte ni trop faible. Si l'homme du métier est en mesure de rejoindre les points représentatifs de ses expériences dans un plan de coordonnées V et F, il obtient en général une courbe à maximum très prononcé, appelée selon le terme consacré "courbe en volcan" (voir par exemple l'article du Professeur M. Boudart : « Principes de Catalyse Hétérogène » (Principles of heterogeneous catalysis) p 1 à 13, dans le Manuel de Catalyse Hétérogène (Handbook of Heterogeneous Catalysis), Rédacteurs en chef G. Ertl et al., Editeurs Wiley-VCH, Weinheim, 1997).

Dans un autre domaine d'application, $D_{AB}$ s'avère un excellant descripteur de l'effet d'empoisonnement d'un catalyseur de composition A par un élément B.

Les descripteurs $D_{AB}$ ont de nombreuses applications en conception de matériaux, tout particulièrement lorsqu'une recherche exploratoire couplant expérimentation à haut débit et exploration combinatoire d'un espace de composition chimique est envisagée: le calcul a priori de descripteurs $D_{AB}$ corrélés seuls ou en combinaison avec les propriétés d'usage recherchées permet d'éliminer un grand nombre de compositions sans intérêt et de faire une grande économie en réservant la vérification expérimentale aux seules compositions dont l'intérêt est prédit par le ou les descripteurs du procédé selon l'invention.

Les différentes étapes de calcul dudit descripteur peuvent être réalisées en utilisant tout moyen connu de l'homme du métier, par exemple au moyen d'un calculateur électronique ou d'un ordinateur. On utilisera de préférence des moyens informatiques permettant d'automatiser tout ou partie des étapes du procédé selon l'invention, ainsi que les différents calculs.

Des valeurs expérimentales de vitesses de réaction intrinsèques permettant de comparer valablement les activités de métaux de transition purs sont disponibles dans la littérature pour de nombreuses réactions d'intérêt industriel comme par exemple l'hydrogénation de l'éthylène, l'hydrogénation du benzène, l'hydrogénation du monoxyde de carbone, la désalkylation à la vapeur du toluène, et d'autres, cette liste n'étant pas limitative, toute réaction catalytique pouvant être considérée dans le procédé selon l'invention.

Ces résultats illustrés par les exemples ci-après démontrent la portée générale de l'invention dans le domaine de la recherche de nouveaux catalyseurs, mais l'invention n'est pas limitée à ce seul domaine.

Les éléments radioactifs artificiels à longue durée de vie produits par certaines réactions nucléaires constituent des dangers biologiques et doivent impérativement être confinés. Parmi les voies de confinement à très long terme préférées par l'homme du métier, la mise en solution solide de ces éléments dans un minéral de grande inertie chimique fait l'objet d'actives recherches expérimentales et théoriques (voir par exemple « L'élimination des armes au plutonium » ( Disposal of weapons plutonium), Rédacteurs en chef E.R. Merz et al, Publications Kluwer Academic, Dordrecht, 1996) : la solubilité d'un radio-élément $R_e$ dans un minéral Z est évidemment directement liée à l'énergie de liaison entre $R_e$ et les atomes constituant ses plus proches voisins dans la structure Z: le descripteur $D_{ZRe}$ calculé au moyen du procédé selon l'invention permet d'accéder à une estimation de cette solubilité.

La nature théorique du calcul permet l'évaluation de la solubilité de $R_e$ dans un minéral existant et de structure cristallographique connue dans la composition duquel entrerait un isotope de $R_e$. Il permet également d'évaluer cette solubilité lorsque $R_e$ entre en position d'insertion ou de substitution dans un minéral dont les éléments majeurs sont différents de $R_e$. Le procédé selon l'invention est donc un outil très efficace en vue de la détermination plus rapide des structures cristallines ou présentant au moins un ordre atomique local, qui sont capables d'assurer une séquestration efficace des radioéléments dangereux pour notre biosphère.

En résumé, l'invention concerne donc un procédé selon la revendication 1 d'estimation d'une propriété d'usage d'un matériau $M_{AB}$ qui est soit l'activité catalytique, soit l'aptitude au stokage de radioéléments dudit matériau et dont l'élément actif est AB comprenant les étapes suivantes :

a) détermination de la valeur des descripteurs $D_{XY}$ pour un ensemble de matériaux $M_{XY}$ dont l'élément actif est XY et dont l'indice $R_{XY}$ mesurant la propriété d'usage dudit matériau est connu,
b) tracé ou expression mathématique de la corrélation $R_{XY}=f(D_{XY})$, l'indice $R_{XY}$ étant connu.
c) calcul du descripteur $D_{AB}$ pour le matériau $M_{AB}$,
d) détermination de l'indice $R_{AB}$ qui constitue une estimation de la propriété d'usage pour le matériau $M_{AB}$ en reportant la valeur $D_{AB}$ sur la corrélation $R_{XY}=f(D_{XY})$, ou en utilisant l'expression mathématique de ladite corrélation.

Dans le procédé selon l'invention, les descripteurs $D_{XY}$ et $D_{AB}$ sont calculés au moyen du procédé P2 comprenant les étapes suivantes :

a1) identification des caractéristiques cristallines du matériau XY (ou AB) par analogie avec des structures existantes,
a2) calcul de l'énergie totale $E_{XY}$ (ou $E_{AB}$) par maille unitaire du réseau de Bravais de XY (ou AB),
a3) recherche itérative des valeurs des paramètres de maille de la structure minimisant l'énergie totale selon la méthode de calcul adoptée, et définissant la maille optimale XY (ou AB) d'énergie totale $E_{XY}$ (ou $E_{AB}$),
a4) construction de la sous-maille X (ou A) obtenue en éliminant les atomes de type B de la maille optimale XY (ou AB),
a5) calcul de l'énergie totale $E_X$ (ou $E_A$) par maille unitaire du réseau de Bravais de A,
a6) construction de la sous-maille y (ou B) obtenue en éliminant tous les atomes appartenant au complément X (ou A) dans la maille optimale XY (ou AB),
a7) calcul de l'énergie totale $E_Y$ (ou $E_B$) par maille unitaire Y (ou B) du réseau de Bravais de Y (ou B),
a8) détermination du nombre n d'atomes de X (ou A) présents dans la première sphère de coordination d'un atome Y (ou B) dans la maille optimale XY (ou AB),
a9) détermination du nombre b d'atomes Y (ou B) par maille optimale XY (ou AB),
a10) calcul du descripteur $D_{XY}$ (ou $D_{AB}$) en appliquant la formule suivante: $D_{XY} = [E_{XY}-(E_X+E_Y)]/nb$ (ou $D_{AB} = [E_{AB}-(E_A+E_B)]/nb$).

Dans les procédés selon l'invention, le matériau AB peut être par exemple un catalyseur et la propriété d'usage peut être par exemple l'activité catalytique du dudit catalyseur dans une réaction chimique. La propriété d'usage peut également éventuellement être la capacité de confinement d'un radioélément dans une matrice minérale solide.

**EXEMPLES**

Application à la recherche de nouvelles compositions de matériaux catalytiques : cette première série d'exemples illustre l'intérêt du procédé selon l'invention, pour identifier des compositions de matériaux catalytiques (catalyseurs) dont le composant actif est un alliage de deux métaux de transition, lorsque les activités relatives des catalyseurs dont le composant actif est chacun des métaux de transition pur sont connues. Les réactions catalytiques étudiées sont l'hydrogénation de l'éthylène, l'hydrogénation du benzène et la réaction d'hydrogénation du monoxyde de carbone en méthane.

**Exemple 1** : Calcul des descripteurs

Dans le cas de carbures métalliques, le procédé selon l'invention permet de calculer les descripteurs $D_{MC}$ de la liaison métal-carbone pour l'ensemble des éléments de transition à partir des caractéristiques cristallines des carbures correspondants. Ces caractéristiques ont été pour la plupart relevées dans la base de donnée « Crystmet », dans la version distribuée par la société Materials Design s.a.r.l. sous l'interface MedeA version 1.1.1.4. Pour les carbures dont les caractéristiques étaient absentes de la base Crystmet, on a procédé par analogie en retenant la structure pérovskite $M_4C$, de type $BaTiO_3$, qui correspond au composé d'insertion du carbone au centre du cube dans le réseau cubique à face centrée du métal, et en recherchant au cas par cas la maille cubique optimale, c'est à dire la valeur de l'arête a du réseau cubique correspondant au minimum de l'énergie électronique totale.

Le calcul des énergies électroniques totales a été effectué en mettant en oeuvre le programme ElectrA, distribué par la société Materials Design s.a.r.l. sous l'interface MedeA version 1.1.1.4.. Les résultats obtenus sont présentés dans le tableau 1.

**Tableau 1 :** Calcul des descripteurs $D_{MC}$ relatifs à différents métaux de transition.

| Métal | Carbure | Ref. Carbure | nxb | $E_{MC}$ x 2 | $E_M$ x 2 | $E_c$ x 2 | $D_{MC}$ x 2 |
|---|---|---|---|---|---|---|---|
| | | | | (kJ.mol$^{-1}$) | (kJ.mol$^{-1}$) | (kJ.mol$^{-1}$) | (kJ.mol$^{-1}$) |
| Ir | Ir$_4$C | Opt (a=0,408nm) | 6x1 | -374344416 | -374147297 | -196731 | **64,6** |
| Os | Os$_4$C | Opt (a=0,400nm) | 6x1 | -362303712 | -362108520 | -196715 | **79,4** |
| Pt | Pt$_4$C | Opt (a=0,416nm) | 6x1 | -386641954 | -386444654 | -196719 | **96,8** |
| Re | ReC | 27291 | 6x1 | -87777536 | -87579546 | -197304 | 114,3 |
| Pd | Pd$_4$C | Opt (a=0,411nm) | 6x1 | -106056569 | -105859011 | -198721 | **139,5** |
| Rh | Rh$_4$C | Opt (a=0,412nm) | 6x1 | -100565402 | -100367684 | -196725 | **166,5** |
| Ru | Ru$_4$C | Opt (a=0,410nm) | 6x1 | -95249682 | -95051829 | -196727 | **187,6** |
| NI | NI$_3$C | 86574 | 6x2 | -48220390 | -47823840 | -393805 | **228,7** |
| Cr | CrC | 62507 | 6x1 | -5704630 | -5505845 | -197300 | **247,5** |
| Cu | Cu$_4$C | Opt (a=0,405nm) | 6x1 | -34896080 | -34697720 | -196735 | **270,8** |
| Fe | Fe$_2$C | 81656 | 6x2 | -27076100 | -26678772 | -394046 | **273,5** |
| W | WC | 34902 | 6x1 | -84893258 | -84694298 | -197174 | **297,9** |
| Co | Co$_2$C | 27080 | 6x2 | -29607825 | -29210080 | -394058 | **307,2** |
| Ta | Ta$_4$C$_3$ | 84332 | 6x3 | -328082780 | -327485482 | -591115 | **343,5** |

Dans le tableau 1, les références (colonne ref.) renvoient soit au numéro d'ordre dans la base Crystmet, soit au paramètre de maille optimal « a » résultant de l'optimisation (lorsque la maille est la maille optimale selon la méthode de calcul implémentée dans le programme ElectrA, cas signalé par l'abréviation Opt.)

## Exemple 2 : Hydrogénation de l'éthylène

Les indices $R_{MC}$ utilisés dans cet exemple sont les activités catalytiques intrinsèques relatives $A_r^{hydC2H4}$ en hydrogénation de l'éthylène d'une série représentative des éléments de transition. Ces activités ont été mesurées par divers auteurs à 273K et 0,1MPa, sur des films métalliques (O. Beeck, Modem.Phys., 17, 61, 1945 et Disc. Faraday Soc., 8, 118, 1950) ou à l'état supporté sur silice (G.C.A. Schuit et al., Adv. Catalysis 10, 242, 1958). Les deux auteurs ont trouvé essentiellement les mêmes résultats pour les deux formes de mise en oeuvre du métal actif.

Le tableau 2 présente ces résultats expérimentaux disponibles, et les associe aux valeurs des descripteurs $D_{MC}$, calculés au moyen du procédé selon l'invention et extraits du tableau 1. Les activités sont rapportées à l'activité par atome de rhodium, le métal le plus actif que l'on connaisse pour cette réaction, de telle sorte que $A_r^{hydC2H4}(Rh) = 1$.

**Tableau 2:** Activités relatives des métaux de transition pour la réaction d'hydrogénation de l'éthylène et valeurs des descripteurs $D_{MC}$ correspondants. (Les métaux de transition sont classés par valeurs croissantes de $D_{MC}$).

| Métal M | $A_r^{hydC2H4}$ | $D_{MC}$ x 2 (kJ.mol$^{-1}$) |
|---|---|---|
| Ir | 0,135 | 64,6 |
| Pt | 0,207 | 96,8 |
| Pd | 0,43 | 139,5 |
| Rh | 1,0 | 165,5 |
| Ru | 0,74 | 187,6 |
| Ni | 0,12 | 228,7 |
| Cr | 0,015 | 247,5 |
| Cu | 0,017 | 270,8 |

(suite)

| Métal M | $A_r^{hydC2H4}$ | $D_{MC}$ x 2 (kJ.mol$^{-1}$) |
|---|---|---|
| Fe | 0,041 | 273,5 |
| W | 0,018 | 297,9 |
| Ta | 0,0123 | 343,5 |

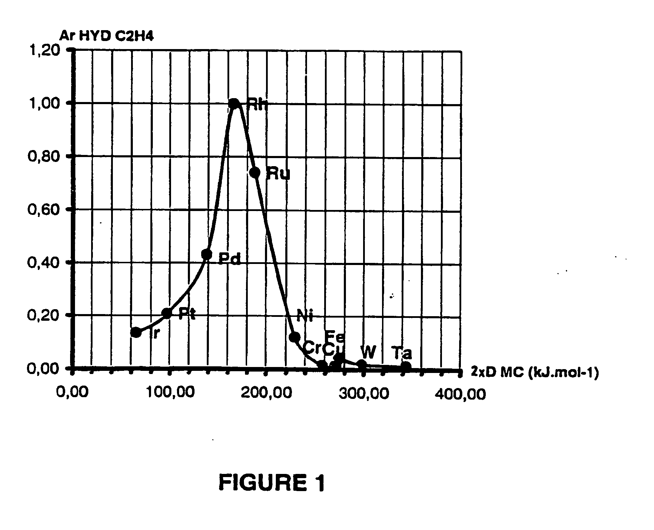

La figure 1 est une représentation graphique des résultats du tableau 2 dans laquelle sont portés en abscisses $D_{MC}$ et en ordonnées $A_r^{hydC2H4}$. Chaque point de coordonnées ($D_{MC}$, $A_r^{hydC2H4}(M)$) caractérise le comportement catalytique intrinsèque d'un métal M pour la réaction considérée indépendamment de son mode de mise en oeuvre. En reliant l'ensemble de ces points, on constate que de manière très surprenante on obtient une courbe maîtresse « en volcan».

### Exemple 3 : Hydrogénation du benzène

Les indices $R_{MC}$ utilisés dans cet exemple sont les activités catalytiques intrinsèques relatives $A_r^{hydC6H6}$ en hydrogénation du benzène. Ces activités ont été mesurées à 373 K et 0,1 MPa par différents auteurs pour une série représentative des éléments de transition (Voir par exemple le brevet Français FR 2 072 586, et le livre « Catalyse de Contact », Edition remise à jour en anglais (« Applied Heterogeneous Catalysis ») par J.F. Le Page et al., p 294, Technip, Paris, 1987).

Le tableau 3 présente ces résultats expérimentaux disponibles, et les associe aux valeurs des descripteurs $D_{MC}$, calculés au moyen du procédé selon l'invention et extraits du tableau 1. Les activités sont rapportées à l'activité par atome de platine, le métal le plus actif que l'on connaisse pour cette réaction, de telle sorte que $A_r^{hydC6H6}(Pt) = 1$.

**Tableau 3:** Activités relatives des métaux de transition pour la réaction d'hydrogénation du benzène et valeurs des descripteurs $D_{MC}$ correspondants (les métaux de transition sont classés par valeurs croissantes de $D_{MC}$).

| Métal M | $A_r^{hydC6H8}$ | $D_{MC}$ x 2 (kJ.mol$^{-1}$) |
|---|---|---|
| Ir | 0,0067 | 64,6 |
| Os | 0,075 | 79,4 |
| Pt | 1 | 96,8 |
| Re | 0,059 | 114,3 |
| Pd | 0,055 | 139,5 |

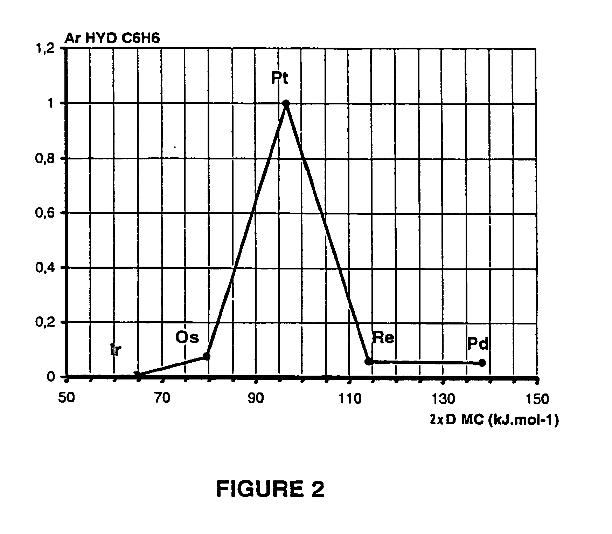

Sur la figure 2, sont portés en abscisses $D_{MC}$ et en ordonnées $A_r^{hydC6H6}$, afin de représenter graphiquement les résultats du tableau 3, chaque point de coordonnées ($D_{MC}$, $A_r^{hydC6H8}(M)$) représente le comportement catalytique intrinsèque d'un métal M pour la réaction considérée indépendamment de son mode de mise en oeuvre. En reliant l'ensemble de ces points, on constate à nouveau que l'on obtient une courbe maîtresse « en volcan ».

### Exemple 4 : Hydrogénation du monoxyde de carbone

Les indices $R_{MC}$ utilisés dans cet exemple sont les activités catalytiques intrinsèques relatives $A_r^{hydCO}$ pour la réaction d'hydrogénation du monoxyde de carbone en méthane. Ces activités ont été mesurées à 548 K et 0,1 MPa avec un rapport molaire $H_2/CO=3$, par différents auteurs pour une série représentative des éléments de transition. Les valeurs retenues découlent de l'analyse critique publiée Par M. A. Vannice (Catal Rev. Sci. Eng. 14,2, p.153-191,1976).

Le tableau 4 présente ces résultats expérimentaux, et les associe aux valeurs des descripteurs $D_{MC}$, calculés selon l'invention et extraits du tableau 1. Les activités sont rapportées à l'activité par atome de ruthénium, métal le plus actif que l'on connaisse pour cette réaction, de telle sorte que $A_r^{hydCO}(Ru) = 1$.

**Tableau 4 :** Activités relatives des métaux de transition pour la réaction de méthanation du monoxyde de carbone et valeurs des descripteurs $D_{MC}$ correspondants (les métaux de transition sont classés par valeurs croissantes de $D_{MC}$).

| Métal M | $R_r^{hydCO}$ | $D_{MC}$ x 2 (kJ.mol$^{-1}$) |
|---|---|---|
| Ir | 0,127 | 64,6 |

(suite)

| Métal M | $R_r^{hydCO}$ | $D_{MC}$ x 2 (kJ.mol$^{-1}$) |
|---|---|---|
| Pt | 0,156 | 96,8 |
| Pd | 0,304 | 139,5 |
| Rh | 0,313 | 165,5 |
| Ru | 1,000 | 187,6 |
| Ni | 0,600 | 228,7 |
| Fe | 0,589 | 273,5 |
| Co | 0,387 | 307,2 |

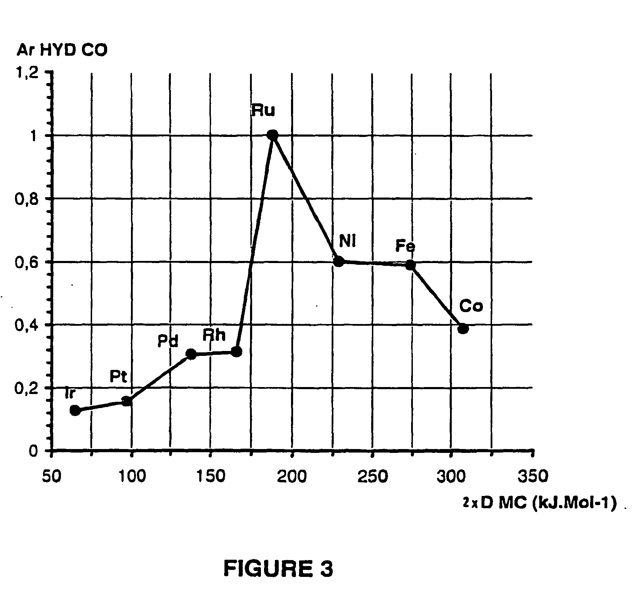

La figure 3 est une représentation graphique des résultats du tableau 4, avec en abscisses $D_{MC}$ et en ordonnées $A_r^{hydCO}$. Chaque point de coordonnées $(D_{MC}, A_r^{hydCO}(M))$ représente le comportement catalytique intrinsèque d'un métal M pour la réaction considérée indépendamment de son mode de mise en oeuvre. En reliant l'ensemble de ces points, on constate à nouveau que l'on obtient une courbe maîtresse « en volcan ».

**Exemple 5 : Comparaison entre les activités prédites et mesurées expérimentalement.**

Les niveaux de performance (activités) d'une série d'alliages de deux métaux de transition, vis à vis des réactions considérées ont été déterminées expérimentalement. Par ailleurs, les descripteurs $D_{MC}$ de chaque l'alliage ont été déterminés, en tenant compte bien entendu de la composition et de la structure cristalline retenue pour l'alliage. Le tableau 5 présente les couples bimétalliques sélectionnés, ainsi que les résultats intermédiaires nécessaires pour le calcul des descripteurs $D_{MC}$.

**Tableau 5 : Couples métalliques retenus.**

| Couple | Carbure | Ref. Carbure | nxb | $E_{MC}$ x 2 (kJ.mol$^{-1}$) | $E_M$x2 (kJ.mol$^{-1}$) | $E_c$x2 (kJ.mol$^{-1}$) | $D_{MC}$ x 2 (kJ.mol$^{-1}$) |
|---|---|---|---|---|---|---|---|
| *Au* | *Au$_4$C* | *Opt(a=0,417nm)* | *6x1* | *-399199021* | *-399D02251* | *-196716* | *9,0* |
| *Ir* | *Ir,C* | *Opt (a=0,408nm)* | *6x1* | *-374344416* | *-374147297* | *-196731* | *64,6* |
| *Os* | *Os$_4$C* | *Opt (a=0,400nm)* | *6x1* | *-362303712* | *-362106520* | *-196715* | *79,4* |
| **IrOs** | **Os$_3$IrC** | **Opt**(a=0,404nm)1 | *6x1* | -365313907 | -365116667 | -196739 | 83,4 |
| *Pt* | *Pt$_4$c* | *Opt (a=0.416nm)* | *6x1* | -386641954 | -386444654 | -196719 | 96,8 |
| IrRe | **Re$_3$IrC** | Opt(a=0,406nm) | *6x1* | -356472810 | -356275504 | -196740 | 94,4 |
| *Re* | *ReC* | *27291* | *6x1* | *-87777536* | *-87579546* | *-197304* | *114,3* |
| **PtAu** | **Pt$_3$AuC** | **Opt(a=0,417nm)** | *6x1* | -389781487 | -389584010 | -196716 | 126,8 |
| **PtPd** | **Pd$_3$PtC** | **Opt(a=0,414 nm)** | *6x1* | -176202917 | -176005434 | -196721 | 127,1 |
| *Pd* | *Pd$_4$C* | *Opt (a=0,411nm)* | *6x1* | *- 1056569* | *-105859011* | *-196721* | *139,5* |
| **PdAu** | **Pd$_3$AuC** | Opt(a=0.415nm) | *6x1* | -179342450 | -179144864 | -196719 | 144,4 |
| **PdAg** | **Pd$_3$AgC** | Opt(a=0,412nm) | *6x1* | -107473939 | -107276290 | -196696 | 158,8 |
| *Ni* | *Ni$_3$C* | *86574* | *6x2* | *-48220390* | *-47823840* | *-393805* | *228,7* |
| **FeCo** | **FeCoC** | **Dérivé de 81656** | 6x2 | -28341529 | -27944516 | -394033 | 248,2 |
| **FeNI** | **FeNIC** | **Dérivé de 81656** | 6x2 | -29677722 | -29280498 | -394033 | 265,9 |
| *Fe* | *Fe$_2$C* | *81656* | *6x2* | *-27076100* | *-26678772* | *-394046* | *273,5* |
| *Co* | *Co$_2$C* | *27080* | *6x2* | *-29607825* | *-29210080* | *-394058* | *307,2* |

(Les matériaux sont classés par valeurs croissantes du descripteur $D_{MC}$. Les données afférentes aux métaux purs intervenant dans les couples sont rappelées en caractères italiques maigres. Les autres notations sont les mêmes qu'explicitées au tableau 1).

En reportant les valeurs de $D_{MC}$ obtenues pour les alliages sur les axes des abscisses des graphiques correspondant aux courbes maîtresses montrées dans les figures 1 à 3, il est possible de lire en ordonnées sur les courbes maîtresses des valeurs d'activité catalytiques relatives qui sont les valeurs d'activité prédites pour les alliages vis à vis des réactions correspondantes.

Le tableau 6 présente les valeurs des descripteurs $D_{MC}$, les activités prédites et les activités mesurées expérimentalement pour chaque alliage considéré. Ce tableau démontre que l'invention permet d'obtenir une concordance satisfaisante entre activités prédites et activités expérimentales, compte tenu des incertitudes de mesure expérimentale, d'une part, et de l'approximation qui est faite sur la nature de la combinaison bimétallique active, d'autre part.

**Tableau 6 :** Comparaison des activités catalytiques prédites selon l'invention et des activités expérimentales pour les couples métalliques retenus à l'exemple 1.

| Couple | $D_{MC}$x2 | Réaction | Activité Exp. | Ref. | Activité prédite |
|---|---|---|---|---|---|
| Ir$_3$Os | 83,4 | Hyd B | 12,7 (Os=1) | (a) | 3,8 (Os=1) |
| Re$_3$Ir | 94,4 | Hyd B | 4,6 (Re=1) | (b) | 14,9(Re=1) |
| Pt$_3$Au | 126,8 | Hyd X | 0,7 (Pt=1) | (c) | 0,33 (Pt=1) |
| Pd$_3$Pt | 127,1 | Hyd X | 0,26 (Pt=1) | (c) | 0,32 (Pt=1 ) |
| Pd$_3$Au | 144,4 | Hyd E | 1,6 (Pd=1) | (d) | 1,24 (Pd=1) |
| Pd$_3$Ag | 158,8 | Hyd E | 1,3 (Pd=1) | (e) | 1,98 (Pd=1) |
| FeCo | 248,2 | Méth. | 1,15 (Fe=1) | (f) | 1,19 (Fe=1) |
| FeNi | 265,9 | Méth. | 0,7 (Fe=1) | (f) | 1,02 (Fe=1) |
| **(a)**G. Leclerc et al., Bull. soc. Chim. Belg. ,88, 7-8, p 577, 1979.<br>**(b)** J.P. Brunelle et al., CRAS Série C, T282, p 879-882, 1976.<br>**(c)**E. Guillon, Thèse Université Paris VI, Chap II, p112, 1999.<br>**(d)** S.H. Inami, H. Wise, J. Catal., 46, p 204, 1977.<br>**(e)**M. Kowaka, J. Jap. Inst. Metals, 23, p 655, 1959.<br>**(f)** J.A. Amelse et al., J. Catal. 72, p 95, 1981. | | | | | |

Les valeurs de $D_{MC}$ sont en kJ.mol$^{-1}$. Les réactions considérées sont l'hydrogénation du benzène (HYD B, ref. a et b) ou du xylène (HYD X, ref. c), l'hydrogénation de l'éthylène (HYD E, ref. d et e) et l'hydrogénation du monoxyde de carbone en méthane (Méth., ref. f). Les activités expérimentales ou prédites sont exprimées en valeurs relatives par rapport à celle d'un métal pur. Les activités prédites sont obtenues par interpolation linéaire sur les courbes maîtresses des figures 1 à 3.

Le procédé selon l'invention permet de prévoir les effets expérimentalement observés tels que :

- l'effet promoteur sensible de l'iridium sur l'osmium et le rhénium en hydrogénation du benzène,
- l'effet négatif de l'or et du palladium sur le platine en hydrogénation d'un mono-aromatique ,
- les effets promoteurs de l'or et de l'argent sur le palladium en hydrogénation de l'éthylène,
- l'effet légèrement promoteur du cobalt sur le fer en méthanation,
- la quasi-absence d'effet significatif du nickel sur le fer en méthanation.

Le procédé selon l'invention s'applique donc à des combinaisons d'éléments en nombre et en proportions quelconques et permet l'évaluation à des fins de tri préliminaire de la propriété d'usage (activité catalytique) de cette combinaison pour les réactions catalytiques dont les courbes maîtresses (Activité/$D_{MC}$) relatives aux éléments purs ont été déterminées au préalable.

**Exemple 6 : Application à la recherche de matériaux de stockage de radioéléments.**

La fluoroapatite $Ca_{10}(PO_4)_6F_2$ est connue comme l'un des matériaux les plus résistants aux dégâts consécutifs à une irradiation, c'est pourquoi des analogues structuraux de ce minéral ont été proposés pour le stockage d'isotopes de radioéléments dangereux pour l'environnement. Il existe en outre des exemples naturels de tels analogues structuraux, les britholites d'Oklo, site d'un réacteur nucléaire fossile (R. Bros et al. Radiochim. Acta 74, 277, 1996). Ces britholites, ont pour formule générale $Ca_{10-y}E_y(SiO_4)_y(PO_4)_{6-y}(F,OH)_2$, où E représente une terre rare ou un actinide au degré d'oxydation 3 et y un nombre réel compris entre 0 et 6, et la même structure cristallographique dérivée de celle de la fluoroapatite, avec notamment une maille unitaire hexagonale et une symétrie inférieure ou égale à celle du groupe d'espace P63/m. Les cations occupent deux sites cristallographiquement non équivalents, le type (1) ayant dans sa première sphère de coordination 9 premiers voisins oxygène O, et le type (2) ayant dans sa première sphère de coordination 6 premiers voisins O et un premier voisin F, ou O d'un groupe hydroxyle OH. Il est connu expérimentalement (J. Lin et al. Materials Chemistry and Physics, 38, p 98-101, 1994) que les cations de rayon ionique plus élevé et charge faible ont une affinité plus grande pour les sites (1), tandis que les cations de rayon ionique plus faible et charge élevée ont une affinité plus grande pour les sites (2).

Le procédé selon l'invention a été appliqué pour évaluer les descripteurs $D_{AB}$ dans les cas définis au tableau 7:

**Tableau 7:** Définition des cas d'étude de l'exemple 6 (en exposant, entre parenthèses, est indiquée la localisation de l'élément concerné en site (1) ou site (2).)

| Structure | Elément B | Matrice A | Cas |
|---|---|---|---|
| $Ca_4^{(1)}Ca_6^6(PO_4)_6F_2$ | Ca (site 1) | $Ca_6^{(2)}(PO_4)_6F_2$ | 1 |
| $Ca_4^{(1)}Ca_6^{(2)}(PO_4)_6F_2$ | Ca (site 2) | $Ca_4^{(1)}(PO_4)_6F_2$ | 2 |
| $Ca_{10}(PO_4)_6F_2$ | Ca (site quelconque) | $(PO_4)_6F_2$ | 2bis |
| $Sr_4^{(1)}Sr_6^{(2)}(PO_4)_6F_2$ | Sr (site 1) | $Sr_6^{(2)}(PO_4)_6F_2$ | 3 |
| $Sr_4^{(1)}Sr_6^{(2)}(PO_4)_6F_2$ | Sr (site 2) | $Sr_4^{(1)}(PO_4)_6F_2$ | 4 |
| $Sr_{10}(PO_4)_6F_2$ | Sr (site quelconque) | $(PO_4)_6F_2$ | 4bis |
| $Ca_{10}(PO_4)6I_2$ | I | $Ca_{10}(PO_4)_6$ | 5 |
| $Ca_{10}(PO_4)_6F_2$ | F | $Ca_{10}(PO_4)_6$ | 6 |
| $Ca_4^{(1)}Ca_5^{(2)}U^{(2)}(SiO_4)(PO_4)_5F_2$ | U (site 2) | $Ca_4^{(1)}Ca_5^{(2)}(SiO_4)(PO_4)_5F_2$ | 7 |
| $Ca_4^{(1)}Ca_5^{(2)}U^{(2)}(SiO_4)(PO_4)_5F_2$ | Ca (site 2) | $Ca_4^{(1)}U^{(2)}(SiO_4)(PO_4)_6F_2$ | 8 |
| $Ca_3^{(1)}Cs^{(1)}Ca_5^{(2)}U^{(2)}(PO_4)_6F_2$ | Cs (site 1) | $Ca_3^{(1)}Ca_5^{(1)}U^{(2)}(PO_4)_6F_2$ | 9 |
| $Ca_3^{(1)}Cs^{(1)}Ca_5^{(2)}U^{(2)}(PO_4)_6F_2$ | Ca (site 1) | $Cs^{(1)}Ca_5^{(2)}U^{(2)}(PO_4)_6F_2$ | 10 |
| $Ca_3^{(1)}Cs^{(1)}Ca_5^{(2)}U^{(2)}(PO_4)_6F_2$ | U (site 2) | $Ca_3^{(1)}Cs^{(1)}Ca_5^{(2)}(PO_4)_6F_2$ | 11 |
| $Ca_3^{(1)}Cs^{(1)}Ca_5^{(2)}U^{(2)}(PO_4)_6F_2$ | Ca (site 2) | $Ca3^{(1)}Cs^{(1)}U^{(2)}(PO_4)_6F_2$ | 12 |

Dans la suite de l'exemple les descripteurs calculés sont notés par exemple $D_mU_6$ pour descripteur de l'énergie de liaison U-matrice dans le cas 6.

Les caractéristiques cristallographiques des structures fluoroapatite et britholithe ont été trouvées dans la base de données ICSD (référence 9444 de la base ICSD). La détermination ab initio des énergies totales par maille des différentes structures complètes ou partielles intervenant dans le calcul des différents descripteurs a été obtenue en mettant en oeuvre le logiciel "CASTEP", distribué par la société Molecular Simulations Inc., 6985 Scranton road, CA 92121-3752, USA. Les mailles complètes n'ont pas été optimisées, la maille initiale de la fluoroapatite ayant été conservée. Les différentes quantités intervenant dans le calcul des descripteurs selon l'invention et obtenues pour cet exemple sont rassemblées dans le tableau 8.

**Tableau 8:** Calcul des descripteurs selon l'invention (la numérotation des cas renvoie au tableau 7).

| Cas | Descr. | nxb | E[AB] (kJ.mol-1) | E[AB-B] x 2 (kJ.mol-1) | E[AB-A] x 2 (kJ.mol-1) | D[AB] x 2 (kJ.mol1) |
|---|---|---|---|---|---|---|
| 1 | $D_{mCa1}$ | 9x4 | -2224947,555 | -1832982,568 | -386969,842 | **138,7** |
| 2 | $D_{mCa2}$ | 7x6 | -2224947,555 | -1636683,288 | -580826,534 | **177,1** |

(suite)

| Cas | Descr. | nxb | E[AB] (kJ.mol-1) | E[AB-B] x 2 (kJ.mol-1) | E[AB-A] x 2 (kJ.mol-1) | D[AB] x 2 (kJ.mol1) |
|---|---|---|---|---|---|---|
| 2bis | $D_{mCa2bis}$ | 7,8x10 | -2224947,555 | -1244786,335 | -968522,4154 | **149,2** |
| 3 | $D_{mSr3}$ | 9x4 | -2066270,622 | -1737771,771 | -323791,119 | **130,8** |
| 4 | $D_{mSr4}$ | 7x6 | -2066270,622 | -1573285,003 | -486176,910 | **162,1** |
| 4bis | $O_{mSr4bis}$ | 7,8x10 | -2066270,622 | -1244786,335 | -810478,644 | **141,1** |
| 5 | $D_{m15}$ | 3x2 | -2155822,089 | -2052644,693 | -96484,504 | **1115,5** |
| 6 | $D_{mF8}$ | 3x2 | -2224947,555 | -2096062,721 | -127306.756 | **263,0** |
| 7 | $D_{mU7}$ | 7x1 | -2256817,771 | -2119698,721 | -135204,7331 | **273,5** |
| 8 | $D_{mCas}$ | 7x5 | -2256817,771 | -1767347,797 | -483937,02 | **31,6** |
| 9 | $D_{mCs9}$ | 9x1 | -2219511,52 | -2166370,398 | -53339,046 | **-22,0** |
| 10 | $D_{mCa10}$ | 9x3 | -2219505,785 | -1926116,524 | -290174,559 | **39,7** |
| 11 | $D_{mU11}$ | 7x1 | -2219505,785 | -2082594,463 | -135204,733 | **243,8** |
| 12 | $D_{mCa12}$ | 7x5 | -2219505,785 | -1730197,794 | -483937,02 | **30,7** |

Des rapports de solubilités sont présentés au tableau 9. Ils sont évalués à partir des descripteurs dont les valeurs sont présentées au tableau 8, selon la formule générale dérivée de la loi de Boltzmann:

$$RS[A_i/B_j] = Exp\ ((D_{mAi}-D_{mBj})/kT)$$

ramenés à la température de référence de 1700K, température à laquelle la synthèse des britholites à partir de minéraux sources des constituants est effective (L. Boyer, thèse INP Toulouse, Juillet 1998). Dans cette formule générale, k est la constante de Boltzmann et vaut 0,00831156 kJ.mol-1.K-1, et T est la température absolue en Kelvin.

La comparaison de $D_{mca1}$ et $D_{mSr3}$ permet d'évaluer le rapport des solubilités de Ca et Sr en site (1) dans la fluoroapatite d'une part, la comparaison de $D_{Ca2}$ et $D_{Sr4}$ permet d'évaluer le rapport des solubilités de Ca et Sr en site (2) dans la fluoroapatite d'autre part, et par là le potentiel de la fluoroapatite pour le stockage des isotopes radioactifs du strontium par substitution au calcium. Une comparaison complémentaire implique $D_{mCa2bis}$ et $D_{mSr4bis}$: elle permet d'évaluer le rapport global des solubilités de Ca et Sr en site quelconque dans la fluoroapatite.

La comparaison de $D_{mls}$ et $D_{mF8}$ permet d'évaluer le rapport des solubilités de I et F dans la fluoroapatite et par là le potentiel de la fluoroapatite pour le stockage des isotopes radioactifs de l'iode par substitution au fluor.

La comparaison de $D_{mU7}$ et $D_{mCa8}$ permet d'évaluer le rapport des solubilités de U et Ca en site (2) dans la britholithe et par là le potentiel de la britholithe pour le stockage des isotopes radioactifs de l'Uranium par substitution au calcium en sites (2).

La comparaison de $D_{mCs9}$ et $D_{mCa10}$ d'une part, de $D_{mU11}$ et $D_{mCa12}$ d'autre part, permettent d'évaluer le rapport des solubilités de Cs et Ca en sites (1) dans la fluoroapatite d'une part, et de U et Ca en sites (2) d'autre part, et par là le potentiel de la fluoroapatite pour le stockage simultané des isotopes radioactifs du césium et de l'uranium par substitution au calcium.

**Tableau 9 :** Calcul des rapports de solubilité à 1700K à partir des descripteurs selon l'invention (la numérotation associée aux éléments chimiques renvoie aux cas décrits au tableau 7)

| Ai/BJ | RS[Ai/BJ] | Minéral de stockage | Elément à stocker |
|---|---|---|---|
| Sr4bis/Ca2bis | **0,56** | **Fluoroapatite** | **Sr** |
| Sr3/Ca1 | **0,57** | **Fluoroapatite** | **Sr** |
| Sr4/Ca2 | **0,348** | **Fluoroapatite** | **Sr** |
| 15/F6 | **$1,7.10^{28}$** | **Fluoroapatite** | **I** |
| U7/Ca8 | **$2,8.10^{7}$** | **Britholite** | **U** |

(suite)

| Ai/BJ | RS[Ai/BJ] | Minéral de stockage | Elément à stocker |
|---|---|---|---|
| Cs9/Ca10 | 0,013 | **Fluoroapatite** | **Cs** |
| U11/Ca12 | $0,32.10^7$ | **Fluoroapatite** | **U** |

Le tableau 9 démontre que le procédé selon invention permet de trier selon un critère quantitatif les différents matériaux cristallins envisagés, en fonction de leur aptitude à solubiliser les isotopes radioactifs des éléments strontium, césium et uranium d'une part et iode d'autre part, par substitution ionique aux éléments calcium d'une part et fluor d'autre part. On constate en particulier que l'invention permet de prévoir une très grande affinité de la fluoroapatite pour l'iode et ses isotopes radioactifs, en substitution au fluor.

La fluoroapatite permet égaler de substituer partiellement le strontium et ses isotopes radioactifs au calcium, le strontium restant toutefois moins soluble que le calcium dans la fluoroapatite. Le rapport Sr3/Ca1 obtenu est plus élevé que le rapport Sr4/Ca2. Le procédé selon l'invention permet donc de prévoir, conformément à l'expérience de LIN et al. évoquée précédemment, que le site cristallographique (1) est préféré au site (2), le strontium au degré d'oxydation +2 ayant un rayon ionique plus élevé (0,126 nm) que celui du calcium (0,100 nm) pour un même degré d'oxydation +2.

Le procédé selon l'invention permet de prévoir une très grande solubilité de l'uranium en site (2) de la britholite, ce que confirme l'existence des britholites riches en uranium du réacteur nucléaire fossile du site d'Oklo au Congo. En revanche, la substitution simultanée d'un ion $Ca^{+2}$ par un ion $Cs^{+1}$ en site (1) et d'un ion $Ca^{+2}$ par un ion $U^{+2}$ en site (2) de la fluoroapatite est d'après le procédé selon l'invention un processus défavorable, du fait de la valeur négative du descripteur $D_{mCs9}$ (tableau 8). L'invention permet donc d'éliminer a priori la fluoroapatite en tant que telle pour le stockage d'actinides, et permet de comprendre pourquoi l'homme du métier lui préfère les britholites.

## Revendications

**1.**  Procédé permettant de classer des solides cristallins par ordre d'efficacité pour un grand nombre d'applications utilisable pour la sélection d'un nouveau matériau $M_{AB}$ actif sous forme de solide cristallin dont l'usage fait intervenir la formation ou la modification d'au moins une liaison chimique ou impose d'éviter la formation de ladite liaison et dont l'élément actif est AB, par estimation d'une propriété d'usage de ce matériau, qui est soit l'activité catalytique soit l'aptitude au stockage de radioéléments dudit matériau, ledit procédé comprenant les étapes suivantes :

a) détermination de la valeur des descripteurs $D_{XY}$ pour un ensemble de matériaux $M_{XY}$ dont l'élément actif est XY et dont l'indice $R_{XY}$ mesurant la propriété d'usage dudit matériau est connu.
b) tracé ou expression mathématique de la corrélation $R_{XY}=f(D_{XY})$, l'indice $R_{XY}$ étant connu.
c) calcul du descripteur $D_{AB}$ pour le matériau $M_{AB}$,
d) détermination de l'indice $R_{AB}$ qui constitue une estimation de la propriété d'usage pour le matériau $M_{AB}$ en reportant la valeur $D_{AB}$ sur la corrélation $R_{XY}=f(D_{XY})$, ou en utilisant l'expression mathématique de ladite corrélation.

et dans lequel les descripteurs $D_{XY}$ et $D_{AB}$ sont déterminés au moyen d'un procédé comprenant les étapes suivantes :

1) identification des caractéristiques cristallines du matériau XY (ou AB) par analogie avec des structures existantes ou lorsqu'elles sont disponibles dans une base de données cristallographiques,
2) calcul de l'énergie totale par maille unitaire du réseau de Bravais de XY (ou AB),
3) éventuellement, lorsque ces données cristallographiques ne sont pas disponible, recherche itérative des valeurs des paramètres de maille de la structure minimisant l'énergie totale selon la méthode de calcul adoptée, et définissant la maille optimale XY (ou AB) d'énergie totale $E_{XY}$ (ou $E_{AB}$),
4) construction de la sous-maille X (ou A) obtenue en éliminant les atomes de type B de la maille optimale XY (ou AB),
5) calcul de l'énergie totale $E_X$ (ou $E_A$) par maille unitaire du réseau de Bravais de A,
6) construction de la sous-maille Y (ou B) obtenue en éliminant tous les atomes appartenant au complément X (ou A) dans la maille optimale XY (ou AB),
7) calcul de l'énergie totale $E_Y$ (ou $E_B$) par maille unitaire Y (ou B) du réseau de Bravais de Y (ou B).
8) détermination du nombre n d'atomes de X (ou A) présents dans la première sphère de coordination d'un atome Y (ou B) dans la maille optimale XY (ou AB),
9) détermination du nombre b d'atomes Y (ou B) par maille optimale XY (ou AB),

10) calcul du descripteur $D_{XY}=[E_{XY}-(E_X+E_Y)]/nb$ ou $D_{AB}=[E_{AB}-(E_A+E_B)]/nb$.

**2.** Procédé selon la revendication 1 dans lequel le matériau AB est un catalyseur et la propriété d'usage est l'activité catalytique du dudit catalyseur dans une réaction chimique.

**3.** Procédé selon la revendication 1 dans lequel la propriété d'usage est la capacité de confinement d'un radioélément dans une matrice minérale solide.

**4.** Procédé selon la revendication 2 ans lequel ladite réaction chimique est l'hydrogénation de l'éthylène ou l'hydrogénation du benzène ou l'hydrogénation du monoxyde de carbone ou la désalkylation à la vapeur du toluène.

**Claims**

**1.** Process allowing classification of crystalline solids in order of effectiveness for a great number of applications useful for the selection of a new active crystalline solid material $M_{AB}$ whose use involves the formation or the modification of at least one chemical bond or makes it necessary to prevent the formation of said bond and whose active element is AB, by estimation of a property of use of this material, which is either the catalytic activity or the ability to store radio-elements of said material, the process comprising the following steps:

a) determination of the value of descriptors $D_{XY}$ for a set of materials $M_{XY}$ whose active element is XY and whose index $R_{XY}$ that measures the property of use of said material is known,
b) diagram or mathematical expression of correlation $R_{XY}=f(D_{XY})$, $R_{XY}$ being known,
c) calculation of descriptor $D_{AB}$ for material $M_{AB}$,
d) determination of index $R_{AB}$ that constitutes an estimation of the property of use for material $M_{AB}$ by relating value $D_{AB}$ to correlation $R_{XY}=f(D_{XY})$ or by using the mathematical expression of said correlation,

and in which descriptors $D_{XY}$ and $D_{AB}$ are determined with a process that comprises the following stages:

1) identification of the crystalline characteristics of material XY (or AB) by analogy with existing structures or when available in a crystallographic data base,
2) calculation of total energy per unit mesh of the Bravais lattice of XY (or AB),
3) optionally, when these crystallographic data are not avalaible, iterative search for the values of the mesh parameters of the structure that minimize the total energy according to the adopted calculation method and that define optimal mesh XY (or AB) of total energy $E_{XY}$ (or $E_{AB}$),
4) construction of sub-mesh X (or A) that is obtained by eliminating the B-type atoms of optimal mesh XY (or AB),
5) calculation of total energy $E_X$ (or $E_A$) per unit mesh of the Bravais lattice of A,
6) construction of sub-mesh Y (or B) that is obtained by eliminating all of the atoms that belong to complement X (or A) in optimal mesh XY (or AB),
7) calculation of total energy $E_Y$ (or $E_B$) per unit mesh Y (or B) of the Bravais lattice of Y (or B),
8) determination of number n of X (or A) atoms that are present in the first sphere of coordination of a Y (or B) atom in optimal mesh XY (or AB),
9) determination of number b of Y (or B) atoms per optimal mesh XY (or AB),
10) calculation of descriptor $D_{XY}=[E_{XY}-(E_X+E_Y)]/nb$ or $D_{AB}=[E_{AB}-(E_A+E_B)]/nb$.

**2.** Process according to claim 1, in which material AB is a catalyst and the property of use is the catalytic activity of said catalyst in a chemical reaction.

**3.** Process according to claim 1, in which the property of use is the ability to hold a radio-element in a solid mineral matrix.

**4.** Process according to claim 2, in which said chemical reaction is either ethylene hydrogenation or benzene hydrogenation or carbon monoxide hydrogenation or toluene dealkylation with steam.

**Patentansprüche**

**1.** Verfahren, das es ermöglicht, kristalline Festkörper in der Reihenfolge ihrer Wirksamkeit für eine große Anzahl von Anwendungen zu klassifizieren, die für die Auswahl eines neuen aktiven Materials $M_{AB}$ in Form eines kristallinen Festkörpers verwendbar sind, bei dessen Nutzung eine chemische Bindung gebildet oder modifiziert wird oder die Bildung dieser Bindung verhindert wird, und dessen aktives Element AB ist, durch Bewertung einer Nutzungseigenschaft dieses Materials, die entweder in der katalytischen Aktivität des Materials oder der Fähigkeit des Materials zur Speicherung von Radioelementen besteht, wobei das Verfahren die folgenden Schritte umfasst:

a) Bestimmen des Werts der Deskriptoren $D_{XY}$ für eine Gesamtheit von Materialien $M_{XY}$, deren aktives Element XY ist und dessen Index $R_{XY}$, der die Nutzungseigenschaft des Materials misst, bekannt ist,

b) Kurve oder mathematischer Ausdruck der Korrelation $R_{XY}=(D_{XY})$, wobei der Index $R_{XY}$ bekannt ist,

c) Berechnen des Deskriptors $D_{AB}$ für das Material $M_{AB}$,

d) Bestimmen des Index $R_{AB}$, der eine Bewertung der Nutzungseigenschaft für das Material $M_{AB}$ darstellt, indem der Wert $D_{AB}$ auf die Korrelation $R_{XY}=f(D_{XY})$ übertragen wird, oder indem der mathematische Ausdruck der Korrelation verwendet wird,

und wobei die Deskriptoren $D_{XY}$ und $D_{AB}$ mithilfe eines Verfahrens bestimmt werden, das die folgenden Schritte umfasst:

1) Identifizieren der kristallinen Merkmale des Materials XY (oder AB) durch Analogie mit vorhandenen Strukturen oder wenn sie in einer kristallographischen Datenbank verfügbar sind,

2) Berechnen der Gesamtenergie pro Elementarzelle des Bravais-Gitters von XY (oder AB),

3) gegebenenfalls, wenn diese kristallographischen Daten nicht verfügbar sind, iterative Suche der Zellparameterwerte der Struktur, die die Gesamtenergie minimiert, gemäß dem verwendeten Berechnungsverfahren, und Definieren der optimalen Zelle XY (oder AB) der Gesamtenergie $E_{XY}$ (oder $E_{AB}$),

4) Konstruieren der Subzelle X (oder A), die durch Entfernen der Atome vom Typ B aus der optimalen Zelle XY (oder AB) erhalten wird,

5) Berechnen der Gesamtenergie Ex (oder $E_A$) pro Elementarzelle des Bravais-Gitters von A,

6) Konstruieren der Subzelle Y (oder B), die durch Entfernen aller Atome erhalten wird, die zum Komplement X (oder A) in der optimalen Zelle XY (oder AB) gehören,

7) Berechnen der Gesamtenergie $E_Y$ (oder $E_B$) pro Elementarzelle Y (oder B) des Bravais-Gitters von Y (oder B),

8) Bestimmen der Anzahl n der Atome von X (oder A), die in der ersten Koordinationssphäre eines Atoms Y (oder B) in der optimalen Zelle XY (oder AB) vorhanden sind,

9) Bestimmen der Anzahl b der Atome Y (oder B) pro optimaler Zelle XY (oder AB),

10) Berechnen des Deskriptors $D_{XY}= [E_{XY}-(E_X+E_Y)]/nb$ oder $D_{AB} = [E_{AB}-(E_A+E_B)]/nb$

2. Verfahren nach Anspruch 1, wobei das Material AB ein Katalysator ist und die Nutzungseigenschaft die katalytische Aktivität des Katalysators in einer chemischen Reaktion ist.

3. Verfahren nach Anspruch 1, wobei die Nutzungseigenschaft die Fähigkeit zum Einschießen eines Radioelements in eine feste mineralische Matrix ist.

4. Verfahren nach Anspruch 2, wobei die chemische Reaktion die Hydrierung von Ethylen oder die Hydrierung von Benzen oder die Hydrierung von Kohlenmonoxid oder die Dampfdealkylierung von Toluen ist.

**FIGURE 1**

**FIGURE 2**

FIGURE 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5959297 A
- US 5985356 A
- US 6013199 A
- US 6034240 A
- US 6043363 A
- US 5776359 A
- FR 2758278
- FR 2072586

**Littérature non-brevet citée dans la description**

- **J. B. Goodenough.** *Nature,* 20 Avril 2000, vol. 404, 821-822
- **F. Besenbacher et al.** *Science,* 20 Mars 1998, vol. 279, 1913-1915
- **G. Ceder et al.** *Nature,* 16 Avril 1998, vol. 392, 694-696
- **S. M. Senkan.** *Nature,* 23 Juillet 1998, vol. 394, 350-353
- *The Knowledge Foundation,* 23 Janvier 2000
- Catalyse combinatoire et haut débit de conception et d'évaluation de catalyseurs. **J.M. Newsam.** Séries de publication NATO ASI. Kluwer Academic, 1999
- **H. Toulhoat et al.** *Catalysis today,* 1999, vol. 50, 629-636
- **J.P. Eberhart.** Structure et analyse chimique des matériaux. John Wiley and Sons, 1991
- Nouvelles Tendances dans la Chimie des Matériaux. **E. Wimmer.** New trends in materials chemistry. Kluwer Scientific, 1997, 195-238
- Principes de Catalyse Hétérogène. **Professeur M. Boudart et al.** Manuel de Catalyse Hétérogène. Wiley-VCH, 1997, 1-13
- L'élimination des armes au plutonium. Kluwer Academic, 1996
- **O. Beeck.** *Modem.Phys.,* 1945, vol. 17, 61
- *Disc. Faraday Soc.,* 1950, vol. 8, 118
- **G.C.A. Schuit et al.** *Adv. Catalysis,* 1958, vol. 10, 242
- Catalyse de Contact. **J.F. Le Page et al.** Technip. 1987, 294
- **M. A. Vannice.** *Catal Rev. Sci. Eng.,* 1976, vol. 14 (2), 153-191
- **G. Leclerc et al.** *Bull. soc. Chim. Belg.,* 1979, vol. 88 (7-8), 577
- **J.P. Brunelle et al.** *CRAS Série C,* 1976, vol. T282, 879-882
- **E. Guillon.** Thèse Université Paris VI. 1999, 112
- **S.H. Inami ; H. Wise.** *J. Catal.,* 1977, vol. 46, 204
- **M. Kowaka.** *J. Jap. Inst. Metals,* 1959, vol. 23, 655
- **J.A. Amelse et al.** *J. Catal.,* 1981, vol. 72, 95
- **R. Bros et al.** *Radiochim. Acta,* 1996, vol. 74, 277
- **J. Lin et al.** *Materials Chemistry and Physics,* 1994, vol. 38, 98-101
- **L. Boyer.** *thèse INP Toulouse,* Juillet 1998